# EUROPÄISCHE PATENTSCHRIFT

(11) **EP 1 295 740 B1**
(45) Veröffentlichungstag und Bekanntmachung des Hinweises auf die Patenterteilung: **30.03.2005**
(21) Anmeldenummer: 02017095.7
(22) Anmeldetag: 30.07.2002
(51) Int. Cl.: B60H 1/02

(54) **Kühlmittelkreislauf mit Abgaswärmetauscher**
Coolant cycle with exhaust gas heat exchanger
Cycle de refroidissement avec échangeur de chaleur avec les gaz d'échappement

(30) Priorität: 20.09.2001 DE 10146346
(43) Veröffentlichungstag der Anmeldung: 26.03.2003
(73) Patentinhaber: Behr GmbH & Co. KG, 70469 Stuttgart (DE)
(72) Erfinder: Banzhaf, Matthias, Dipl.-Ing., 74074 Heilbronn (DE); Glaser, Markus, 71067 Sindelfingen (DE); Schmidt, Michael, 76133 Karlsruhe (DE); Seeger, Andreas, 73773 Aichwald (DE); Weinbrenner, Markus, Dipl.-Ing., 70499 Stuttgart (DE)
(74) Vertreter: Grauel, Andreas, Dr.

(56) Entgegenhaltungen:
- EP-A- 0 985 807
- DE-A- 10 047 810
- DE-A- 19 537 798
- DE-C- 950 047
- US-A- 2 038 193
- US-A1- 2001 013 409

## Beschreibung

Die Erfindung betrifft einen Kühlmittelkreislauf gemäß dem Oberbegriff des Anspruches 1, wie zum Beispiel aus US 2001/0013409 A1 bekannt.

Aus der DE 198 47 607 A1 ist ein Heizungskreislauf für ein Kraftfahrzeug bekannt, bei dem ein Zuheizer für den Heizungskreislauf vorgesehen ist, dessen Abgase vor bzw. hinter einen Katalysator in eine Abgasanlage münden.

Die DE 31 03 198 A1 zeigt einen in einem Abgasstrang angeordneten Wärmetauscher, der zusätzliche Heizleistung zur Verfügung stellt.

Aus der WO 97/47865 ist ein Wärmetauscher der Abgasrückführleitung in den Kühlmittelkreislauf integrierbar, so dass die aus dem rückgeführten Abgas aufgenommene Wärme auch bei abgeschalteter Heizvorrichtung das Kühlmittel aufheizt, um eine Kühlung des rückgeführten Abgases auch bei Nichtgebrauch der Heizung zu erreichen. Dabei kann der Wärmetauscher auch direkt in den Heizkreislauf eingebunden sein, wenn der Heizungswärmetauscher stets vom Kühlmittel durchflossen wird. Durch die Kühlung des Abgases durch den Wärmetauscher erfolgt eine Absenkung der Verbrennungs-Spitzentemperatur und eine Reduzierung der NOx-Emissionen.

Derartige Kühlmittelkreisläufe lassen jedoch noch Wünsche offen. Der Erfindung liegt die Aufgabe zugrunde, einen Kühlmittelkreislauf der eingangs genannten Art zu verbessern.

Diese Aufgabe wird erfindungsgemäß durch einen Kühlmittelkreislauf mit den Merkmalen des Anspruches 1 gelöst. Vorteilhafte Ausgestaltungen sind Gegenstand der Unteransprüche.

Hierbei ist Kühlmittel vom Kühler ausgehend direkt dem Abgaswärmetauscher zuführbar, d.h. ohne Zwischenschaltung von Elementen, welche die Temperatur des Kühlmittels wesentlich beeinflussen, wie bspw. Wärmetauscher.

Vorzugsweise ist hierbei Kühlmittel wahlweise vom Kühler ausgehend, d.h. abgekühltes Kühlmittel, oder vom Motoraustritt, d.h. nicht abgekühltes Kühlmittel dem Abgaswärmetauscher zuführbar. Vorzugsweise wird hierbei die Kühlmittelzufuhr vom Kühler oder Motoraustritt zum Abgaswärmetauscher durch eine Umschalteinrichtung, vorzugsweise ein oder mehrere Ventile, geregelt.

Vorzugsweise ist Kühlmittel direkt vom Motor ausgehend dem Abgaswärmetauscher zuführbar, d.h. ohne Zwischenschaltung von Elementen, welche die Temperatur des Kühlmittels wesentlich beeinflussen. Gemäß einer bevorzugten Ausführungsform ist das Kühlmittel vom Kühler und vom Motor ausgehend dem Abgaswärmetauscher zuführbar, wobei die Regelung z.B. über ein 3-Wege-Ventil, zwei 2-Wege-Ventile oder einen Thermostat erfolgt.

Optional ist im Kühlmittelkreislauf neben einer Kühlmittelpumpe, die vorzugsweise direkt vor dem Motor angeordnet ist, zur Unterstützung eine Zusatzpumpe vorgesehen. Die Zusatzpumpe ist vorzugsweise im Heizkreislauf, d.h. dem Teil des Kühlmittelkreislaufs, welcher die Heizung umfasst angeordnet.

Ein derartiger Kühlmittelkreislauf kann zum einen zur Temperierung des einem Katalysator zugeführten Abgases benutzt werden, so dass der Katalysator bei optimalen Temperaturen betrieben und die Menge der abgegebenen Schadstoffe minimiert werden kann, und zum anderen als Zuheizer, um die Erwärmung des Kühlmittels und/oder Kabinenraums zu beschleunigen.

Im folgenden ist die Erfindung anhand eines in der Zeichnung dargestellten Ausführungsbeispiels näher erläutert. Die Figur zeigt einen schematisch dargestellten Kühlmittelkreislauf gemäß dem Ausführungsbeispiel.

Die Figur zeigt stark vereinfacht dargestellt den Kühlmittelkreislauf eines Kraftfahrzeugs, insbesondere eines Kraftfahrzeugs mit einem direkt einspritzenden Ottomotor. Hierbei wird Kühlmittel mittels einer Kühlmittelpumpe 1 in den Motor 2 des Kraftfahrzeugs gepumpt. Nachdem dem Motor Wärme entzogen worden ist, gelangt das Kühlmittel über eine Leitung 3 an eine Verzweigung 4. Die Verzweigung 4 führt mit einem Arm, als Leitung 5 bezeichnet, zu einem Thermostat 6 und von diesem über eine Leitung 7 wieder zurück zur Kühlmittelpumpe 1.

Der andere Arm der Verzweigung 4, im folgenden als Leitung 8 bezeichnet, führt über eine erste kleine Abzweigung 9 zum Kühler 10. Vom Kühler 10 ausgehend führt eine Leitung 11 vorbei an einer zweiten kleinen Abzweigung 12 wiederum zum Thermostat 6, von wo aus das Kühlmittel wieder der Kühlmittelpumpe 1 zugeleitet wird. Dabei sorgt der Thermostat 6 dafür, dass beim Starten des Motors 2, also wenn das Kühlmittel noch kalt ist, dieses wiederum direkt dem Motor 2 zugeführt wird, also nicht über den Kühler 10 geleitet wird. Hat das Kühlmittel eine bestimmte Temperatur erreicht, so wird es über den Kühler 10 geleitet, wo es überschüssige Wärme an die Umgebung abgeben kann.

Ausgehend von der ersten kleinen Abzweigung 9 führt eine Leitung 13 zu einem ersten Ventil 14. Zu diesem ersten Ventil 14 führt auch direkt die an der zweiten kleinen Abzweigung 12 abgehende Leitung 15. Somit kann entweder Kühlmittel von vor oder nach dem Kühler 10 zum Ventil 14 und den nachfolgenden Leitungen gelangen.

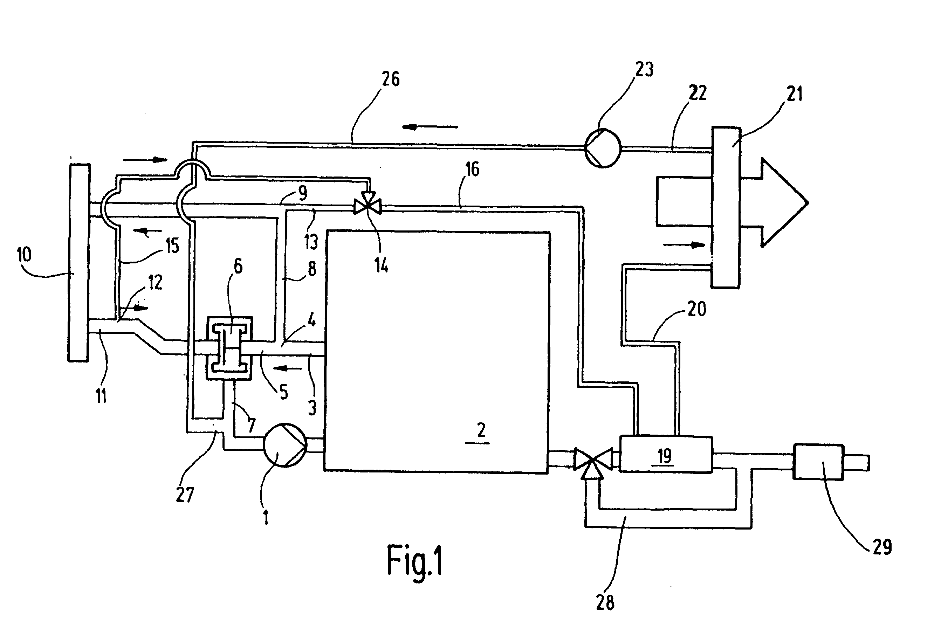

Ausgehend von dem Ventil 14 führt eine Leitung 16 zu einem Abgaswärmetauscher 19 und von diesem ausgehend führt eine Leitung 20 zu einem Heizkörper 21, bei dem Wärme an die Luft abgegeben werden kann, wie in Fig. 1 durch einen Pfeil angedeutet ist. Ausgehend vom Heizkörper 21 führt eine Leitung 22 zu einer Zusatzwasserpumpe 23 und anschließend zu einer Leitung 26, die zu einer Einmündung 27 in die Leitung 7 führt, so dass das Kühlmittel wiederum der Kühlmittelpumpe 1 zugeführt wird.

Im Abgaswärmetauscher 19 wird dem vom Motor 2 erzeugten Abgas Wärme entzogen. Ist jedoch die Temperatur des Kühlmittels zu hoch, so kann bei entsprechender Stellung des Ventils 14 Kühlmittel, das direkt vom Kühler 10 kommt, dem Abgaswärmetauscher 19 zugeführt werden. Dies verhindert ein Sieden des Kühlmittels im Abgaswärmetauscher 19 und stellt sicher, dass die Funktion als Abgaskühler erhalten bleibt und der Wärmetauscher 19 nicht beschädigt wird. Ferner kann durch eine entsprechende Regelung des Ventils 14 gewährleistet werden, dass die Kühlmitteltemperatur vor dem Abgaswärmetauscher 19 nicht unter eine bestimmte Temperatur, bspw. 90°C, absinkt und die Kühlmitteltemperaturen nach dem Abgaswärmetauscher 19 in etwa der Kühlmitteltemperatur einer Kennfeld-kühlung entsprechen.

Der Abgaswärmetauscher 19 weist einen Bypass 28 auf, durch den bei Bedarf ein Teil des vom Motor 2 stammenden Abgases am Abgaswärmetauscher 19 vorbei geführt werden kann.

Der Kühlmittelkreislauf funktioniert folgendermaßen: Hat das den Motor 2 kühlende Kühlmittel eine Temperatur, die über einem (bei einer Kennfeld-kühlung sind es zwei Temperaturen) vorbestimmten Grenzwert liegt, so regelt der Thermostat 6 den Fluss des Kühlmittels derart, dass das Kühlmittel nicht mehr direkt über die Kühlmittelpumpe 1 dem Motor 2 zugeführt wird, sondern über den Kühler 10 geleitet wird, an dem es überschüssige Wärme abgeben kann.

Das Kühlmittel dient ferner der Kühlung des Abgases, welches im Anschluss an den Abgaswärmetauscher 19 einem NOx-Speicherkatalysators 29 zugeführt und durch diesen gereinigt wird. Dieser NOx-Speicherkatalysator 29 hat in einem festen Temperaturfenster die besten Betriebsvoraussetzungen, wofür das Abgas auf eine entsprechende Temperatur abgekühlt wird. Hierfür wird - je nach Bedarf - Kühlmittel von vor dem Kühler 10 und/oder nach dem Kühler 10 dem Abgaswärmetauscher 19 zugeführt. Durch eine entsprechende Regelung des Bypasses 28 lassen sich konstante Abgastemperaturen erzielen.

Ferner kann der Abgaswärmetauscher 19 beim Kaltstart auch als Zuheizer verwendet werden, um eine schnellere Kabinen- und Kühlmittelerwärmung zu erreichen.

### Bezugszeichenliste

- 1: Kühlmittelpumpe
- 2,: Motor
- 3: Leitung
- 4: Verzweigung
- 5: Leitung
- 6: Thermostat
- 7: Leitung
- 8: Leitung
- 9: Abzweigung
- 10: Kühler
- 11: Leitung
- 12: Abzweigung
- 13: Leitung
- 14: Ventil
- 15: Leitung
- 16: Leitung
- 19: Abgaswärmetauscher
- 20: Leitung
- 21: Heizkörper
- 22: Leitung
- 23: Zusatzwasserpumpe
- 26: Leitung
- 27: Einmündung
- 28: Bypass
- 29: NOx-Speicherkatalysator

## Patentansprüche

1. Kühlmittelkreislauf für ein Kraftfahrzeug mit einem Motor (2) und einem Kühler (10), wobei ein Abgaswärmetauscher (19) Teil des Kühlmittelkreislaufs ist, **dadurch gekennzeichnet, dass** Kühlmittel vom Kühler (10) ausgehend direkt dem Abgaswärmetauscher (19) zuführbar ist.

2. Kühlmittelkreislauf nach Anspruch 1, **dadurch gekennzeichnet, dass** Kühlmittel vom Kühler (10) und/oder vom Motor (2) ausgehend dem Abgaswärmetauscher (19) über eine Umschalteinrichtung zuführbar ist.

3. Kühlmittelkreislauf nach einem der vorstehenden Ansprüche, **dadurch gekennzeichnet, dass** die Kühlmittelzufuhr vom Kühler (10) und/oder Motor (2) zum Abgaswärmetauscher (19) durch ein Ventil (14) geregelt wird.

4. Kühlmittelkreislauf nach einem der vorstehenden Ansprüche, **dadurch gekennzeichnet, dass** Kühlmittel vom Motor (2) ausgehend dem Abgaswärmetauscher (19) zuführbar ist.

5. Kühlmittelkreislauf nach einem der vorstehenden Ansprüche, **dadurch gekennzeichnet, dass** Kühlmittel vom Kühler (10) und vom Motor (2) ausgehend dem Abgaswärmetauscher (19) zuführbar ist, wobei die Regelung über ein 3-Wege-Ventil (14) oder zwei 2-Wege-Ventile oder einen Thermostat erfolgt.

6. Kühlmittelkreislauf nach einem der vorstehenden Ansprüche, **dadurch gekennzeichnet, dass** im Kühlmittelkreislauf neben einer Kühlmittelpumpe (1) eine Zusatzpumpe (23) vorgesehen ist.

7. Kühlmittelkreislauf nach Anspruch 6, **dadurch gekennzeichnet, dass** die Kühlmittelpumpe (1) vor dem Motor (2) angeordnet ist.

8. Kühlmittelkreislauf nach Anspruch 6 oder 7, **dadurch gekennzeichnet, dass** die Zusatzpumpe (23) im Heizkreislauf angeordnet ist.

9. Kühlmittelkreislauf nach einem der vorstehenden Ansprüche, **dadurch gekennzeichnet, dass** der Abgaswärmetauscher (19) einen Bypass (28) aufweist.

10. Verwendung eines Kühlmittelkreislaufs nach einem der Ansprüche 1 bis 9 zur Temperierung des einem Katalysator (29) zugeführten Abgases.

11. Verwendung eines Kühlmittelkreislaufs nach einem der Ansprüche 1 bis 9 als Zuheizer.

## Claims

1. Coolant circuit for a motor vehicle, with an engine (2) and a radiator (10), with an exhaust heat exchanger (19) forming part of the coolant circuit, **characterised in that** coolant can be delivered from the radiator (10) direct to the exhaust heat exchanger (19).

2. Coolant circuit according to claim 1, **characterised in that** coolant can be delivered from the radiator and/or from the engine (2) to the exhaust heat exchanger (19) via a changeover device.

3. Coolant circuit according to any of the preceding claims, **characterised in that** the coolant supply from the radiator (10) and/or from the engine (2) to the exhaust heat exchanger (19) is controlled by a valve (14).

4. Coolant circuit according to any of the preceding claims, **characterised in that** coolant can be delivered from the engine (2) to the exhaust heat exchanger (19).

5. Coolant circuit according to any of the preceding claims, **characterised in that** coolant can be delivered from the radiator (10) and from the engine (2) to the exhaust heat exchanger (19) under the control of a 3-way valve (14), two 2-way valves or a thermostat.

6. Coolant circuit according to any of the preceding claims, **characterised in that** an auxiliary pump (23) is installed in the coolant circuit in addition to the coolant pump (1).

7. Coolant circuit according to claim 6, **characterised in that** the coolant pump (1) is located in front of the engine (2).

8. Coolant circuit according to claim 6 or 7, **characterised in that** the auxiliary pump (23) is located in the heating circuit.

9. Coolant circuit according to any of the preceding claims, **characterised in that** the exhaust heat exchanger (19) incorporates a bypass (28).

10. Use of a coolant circuit according to any of claims 1 to 9 for controlling the temperature of the exhaust gas fed to a catalyst (29).

11. Use of a coolant circuit according to any of claims 1 to 9 as an additional heater.

## Revendications

1. Circuit de réfrigérant pour un véhicule automobile avec un moteur (2) et un radiateur (10), un échangeur de chaleur des gaz d'échappement (19) faisant partie du circuit de réfrigérant, **caractérisé en ce que** du réfrigérant peut être amené à partir du radiateur (10) directement à l'échangeur de chaleur des gaz d'échappement (19).

2. Circuit de réfrigérant selon la revendication 1, **caractérisé en ce que** le réfrigérant peut être amené à partir du radiateur (10) et/ou du moteur (2) à l'échangeur de chaleur des gaz d'échappement (19) au moyen d'un dispositif d'inversion.

3. Circuit de réfrigérant selon l'une quelconque des revendications précédentes, **caractérisé en ce que** l'arrivée de réfrigérant venant du radiateur (10) et/ou du moteur (2) et allant à l'échangeur de chaleur des gaz d'échappement (19) est réglée par une vanne (14).

4. Circuit de réfrigérant selon l'une quelconque des revendications précédentes, **caractérisé en ce que** du réfrigérant peut être amené à partir du moteur (2) à l'échangeur de chaleur des gaz d'échappement (19).

5. Circuit de réfrigérant selon l'une quelconque des revendications précédentes, **caractérisé en ce que** du réfrigérant peut être amené à partir du radiateur (10) et du moteur (2) à l'échangeur de chaleur des gaz d'échappement (19), la régulation s'effectuant au moyen d'une vanne à 3 voies (14) ou de deux vannes à 2 voies ou d'un thermostat.

6. Circuit de réfrigérant selon l'une quelconque des revendications précédentes, **caractérisé en ce qu'**une pompe supplémentaire (23) est prévue dans le circuit de réfrigérant à côté d'une pompe à réfrigérant (1).

7. Circuit de réfrigérant selon la revendication 6, **caractérisé en ce que** la pompe à réfrigérant (1) est disposée avant le moteur (2).

8. Circuit de réfrigérant selon la revendication 6 ou 7, **caractérisé en ce que** la pompe supplémentaire (23) est disposée dans le circuit de chauffage.

9. Circuit de réfrigérant selon l'une quelconque des revendications précédentes, **caractérisé en ce que** l'échangeur de chaleur des gaz d'échappement (19) présente une dérivation (28).

10. Utilisation d'un circuit de réfrigérant selon l'une quelconque des revendications 1 à 9 pour la mise en température des gaz d'échappement amenés à un catalyseur (29).

11. Utilisation d'un circuit de réfrigérant selon l'une quelconque des revendications 1 à 9 comme chauffage d'appoint.
